# EUROPÄISCHE PATENTANMELDUNG

(11) **EP 0 581 070 A1**
(43) Veröffentlichungstag der Anmeldung: **02.02.1994**
(21) Anmeldenummer: 93110870.8
(22) Anmeldetag: 07.07.1993
(51) Int. Cl.: B64D 9/00

(54) **Riegelelement**

(30) Priorität: 27.07.1992 DE 4224820
(71) Anmelder: Telair International Cargo Systems GmbH, D-83734 Hausham (DE)
(72) Erfinder: Sundseth, Jarl, D-83727 Schliersee (DE)
(74) Vertreter: Bohnenberger, Johannes, Dr.

(57) **Zusammenfassung**

Bekannt ist ein Riegelelement zum Sichern eines Containers im Frachtraum eines Flugzeuges, mit einem Rahmen (10), der ein Bodenteil (14, 14') und zwei daran befestigte, nach oben ragende Seitenteile (11, 11') aufweist, mit mindestens einem Haken (20, 20'), der auf einer, zwischen den Seitenteilen (11, 11') eingesetzten Befestigungsachse (21, 21') von einer nach unten geklappten Ruheposition in eine nach oben ragende Verriegelungsposition verschwenkbar gelagert ist, und mit Befestigungseinrichtungen (22, 22'; 23, 23'), über welche das Bodenteil (14, 14') in einem Boden (1) des Frachtraums befestigbar ist. Bei einem solchen Riegelelement soll eine erhöhte Betriebssicherheit ohne erhöhtes Gewicht sichergestellt werden. Dies wird dadurch erreich, daß das Bodenteil (14, 14') mindestens abschnittsweise (seitlicher Abschnitt 16, 16') derart elastisch nachgiebig ausgebildet ist, daß bei einer in vertikaler und/oder horizontaler auf den Haken (20, 20') wirkenden Kraft die Seitenteile (11, 11') unter Verformung des Bodenteils (14, 14') bewegbar sind.

## Beschreibung

Die Erfindung betrifft ein Riegelelement zum Sichern eines Containers im Frachtraum eines Flugzeuges nach dem Oberbegriff des Patentanspruches 1.

Container werden am Boden des Frachtraums durch Riegelelemente der eingangs genannten Art gehalten, wobei die dort vorgesehenen Haken eingeklappt werden können, damit man den nur von einer Seite zugänglichen Frachtraum nach und nach befüllen kann. Während des Fluges und insbesondere bei Start und Landung treten Schläge und Stöße auf, welche von den Riegelelementen aufgefangen werden müssen. Hier wird eine sehr hohe Sicherheit gefordert.

Diese hohe Sicherheit kann man aber nicht dadurch erkaufen, daß man die Riegelelemente mit sehr hohen Materialstärken baut, da sonst ihr Gewicht zu hoch würde.

Bei den bisher üblichen Riegelelementen sind die Seitenteile und die Bodenteile als separate Materialstreifen ausgebildet, die über Schraubverbindungen zusammengehalten werden.

Der Erfindung liegt die Aufgabe zugrunde, ein Riegelelement der eingangs genannten Art dahingehend weiterzubilden, daß eine erhöhte Betriebssicherheit ohne erhöhtes Gewicht sichergestellt wird.

Diese Aufgabe wird in überraschend einfacher Weise durch die im Kennzeichen des Patentanspruches 1 genannten Merkmale gelöst.

Dadurch, daß Stöße über die Elastizität des Bodenteils aufgefangen bzw. "abgeflacht" werden, kann man das Riegelelement schwächer (sowohl von der Materialart als auch von der Materialstärke her) auslegen.

Vorzugsweise umfaßt das Bodenteil einen verstärkten mittleren Abschnitt, an welchem es mittels der Befestigungseinrichtungen am Boden des Frachtraums angeschraubt wird. Vom mittleren Abschnitt erstrecken sich zu den Seitenteilen seitliche Abschnitte im Bodenteil, die dünner als der mittlere Abschnitt zur Bildung von elastischen Zonen ausgebildet sind. Hierbei ist es von Vorteil, wenn die Befestigungseinrichtungen bzw. der verstärkte mittleren Abschnitt so ausgebildet sind, daß die seitlichen Abschnitte und damit die Seitenteile sich frei, also nach oben (vom Boden weg) und nach unten (zum Boden hin), bewegen können. Dadurch wird das Auffangen von Stößen in verschiedenen Richtungen begünstigt.

Vorzugsweise sind zwei, durch eine Ausnehmung voneinander getrennte Bodenteile vorgesehen, zwischen denen der Haken (oder zwei Haken) befestigt ist (sind). Wenn bei dieser Anordnung ein Stoß in der Verschwenkebene und horizontal auf den Haken wirkt, so können die Seitenteile in einer Vertikalebene kippen, da dann das eine Bodenteil nach oben und das andere Bodenteil nach unten durchgebogen wird. Gleichzeitig wird hierbei eine Torsionsbelastung der seitlichen Abschnitte, die zu sehr hohen Zugspannungen im Material und damit leicht zu Bruch führen, vermieden.

Die Seitenteile werden möglichst steif ausgebildet, damit die Verformungen im wesentlichen ausschließlich im Bodenteil stattfindet. Hierzu ist es von Vorteil, wenn die Seitenteile an ihren oberen und/oder unteren Kanten mit Verstärkungsrändern versehen sind, die dicker als ein Mittelteil der Seitenteile ausgebildet sind. Der so entstehende, im wesentlichen "["-förmigen Körper ist sehr steif gegenüber Biegemomenten, um eine zur Fläche senkrechte Achse. Vorzugsweise stehen die randseitigen Verdickungen über das (flach ausgebildete) Mittelteil nach außen vor, so daß zwischen den beiden Seitenteilen ein maximal großer Freiraum für die Haken gebildet ist. Andererseits können die Achsen, an welchen die Haken befestigt sind, mittels Sicherungselementen in den Seitenteilen befestigt werden, welche auf dem flachen Mittelteil der Seitenteile aufliegen. Insgesamt gibt es dann keine über die Verstärkungsränder hervorstehenden Teile. Die Material- und damit Gewichtsersparnis ist trotz der erzielbaren Stabilität offensichtlich groß. Vorzugsweise stellt man den Rahmen einstückig her, so daß sowohl die Montagekosten als auch die von den Verbindungsstellen zwischen den Seitenteilen und dem Bodenteil gebildeten Schwachstellen minimiert werden. Hierzu eignet sich insbesondere eine Herstellung des Rahmens als Extrusionsteil bzw. als Strangpreßprofil, das lediglich geringfügig durch spanabhebende Verformugn nachbearbeitet werden muß.

Bevorzugte Ausführungsformen der Erfindung ergeben sich aus den Unteransprüchen.

Nachfolgend wird ein Ausführungsbeispiel der Erfindung anhand von Abbildungen näher erläutert. Hierbei zeigen:
- Fig. 1: eine Seitenansicht einer Ausführungsform des Riegelelementes;
- Fig. 2: eine Draufsicht auf das Riegelelement nach Fig. 1,
- Fig. 3: eine Ansicht auf das Riegelelement nach Fig. 1 entlang der Linie III-III, und
- Fig. 4: einen Teil-Schnitt durch das Riegelelement entlang der Linie IV-IV aus Fig. 2.

Das in den Abbildungen gezeigte Riegelelement weist einen Rahmen 10 auf, der aus zwei Seitenteilen 11, 11' und zwei Bodenteilen 14, 14' besteht, welche über eine Ausnehmung 17 voneinander getrennt und an den Enden der Seitenteile 11, 11' mit diesen einstückig verbunden sind.

Die beiden Bodenteile 14, 14' weisen jeweils einen mittleren Abschnitt 15 und zwei seitliche Abschnitte 16, 16' auf, die dünner ausgebildet sind, als der mittlere Abschnitt.

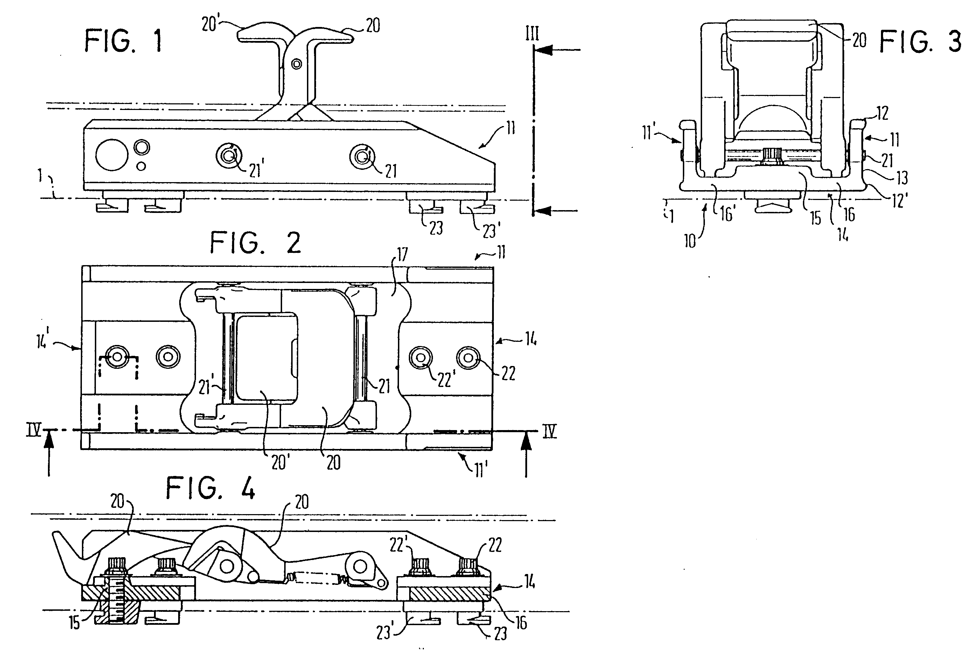

Im mittleren Abschnitt 15 sind Bohrungen angebracht, über welche Befestigungsbolzen 22, 22' durch den mittleren Abschnitt 15 hindurch in Schuhe 23, 23' einschraubbar sind, die in Bodenschienen im Frachtraum eingehakt werden können. Diese Schuhe 23, 23' sind, wie aus der Teil-Schnitt-Darstellung gemäß Fig. 4 ersichtlich, so ausgebildet, daß sie auch ein Distanzstück zwischen den Bodenteilen 14, 14' und dem Boden 1 des Frachtraumes bilden. Auf diese Weise erstrecken sich die Bodenteile 14, 14' frei über dem Boden des Frachtraumes.

Die Seitenteile 11, 11' sind einstückig an die seitlichen Abschnitte 16, 16' sich senkrecht nach oben erstreckend angeformt und weisen jeweils ein flaches Mittelteil 13 und einen oberen und einen unteren Verstärkungsrand 12 bzw. 12' auf. Die Verstärkungsränder 12, 12' springen wulstförmig über die Außenfläche des Mittelteils 13 nach außen hervor.

Zwischen den Seitenteilen 11, 11' sind an sich bekannte Haken 20, 20' eingesetzt. Diese Haken 20, 20' sind kippbar auf Befestigungsachsen 21, 21' gelagert, welche sich durch Bohrungen der Seitenteile 11, 11' hindurch erstrecken und außerhalb der Seitenteile 11, 11' über Sprengringe (in Fig. 1 gezeigt) befestigt sind. Befestigungsachsen 21, 21' sind so dimensioniert, daß sie nicht über die wulstförmigen Verstärkungsränder 12, 12' nach außen hervorstehen.

Wenn nun ein (hier nicht gezeigter) Container mit seinem unteren Rand unter dem in Fig. 1 gezeigten Haken 20 eingerastet ist und z. B. bei einem unruhigen Flug nach oben und unten rüttelt, so werden die Rüttel-Impulse über die Befestigungsachse 21' auf die Seitenteilen 11, 11' übertragen. Da diese mit den Verstärkungsrändern 12, 12' ausgebildet sind, kann man sie, gegenüber derartigen Kräften (Kraftrichtungen), als starre Körper betrachten. Die seitlichen Abschnitte 16, 16' können aber gegenüber dem mittleren Abschnitt 15 nach oben und unten (leicht) nachgeben, so daß keine direkte Kraftübertragung zwischen dem Haken 20 und dem Boden 1 des Frachtraums stattfindet. Die gesamten Teile des hier gezeigten Riegelelementes werden somit vor allzu scharfen und materialbelastenden Impulsen geschützt.

Wenn eine Kraft in Horizontalrichtung auf den Haken 20 wirkt (in Fig. 1 nach links), so entsteht ein Drehmoment entgegen dem Uhrzeigersinn um die Befestigungsachse 21'. In diesem Fall werden dann die Seitenteile 11, 11' (in Fig. 1 entgegen dem Uhrzeigersinn) gekippt. Dabei biegt sich das eine Bodenteil (in den Figuren 1 und 2 das rechte Bodenteil 14) in den seitlichen Abschnitten 16, 16' nach oben durch, das andere Bodenteil (in den Fig. 1 und 2 das linke Bodenteile 14') biegt sich nach unten durch. Dadurch wird wiederum ein auftretender Kraftimpuls in seiner Wirkung gedämpft.

### Bezugszeichenliste

- 1: Boden
- 10: Rahmen
- 11, 11': Seitenteil
- 12, 12': Verstärkungsrand
- 13: Mittelteil
- 14, 14': Bodenteil
- 15: mittlerer Abschnitt
- 16, 16': seitlicher Abschnitt
- 17: Ausnehmung
- 20, 20': Haken
- 21, 21': Befestigungsachse
- 22, 22': Spannbolzen
- 23, 23': Schuh

## Patentansprüche

1. Riegelelement zum Sichern eines Containers im Frachtraum eines Flugzeuges, mit einem Rahmen (10), der ein Bodenteil (14, 14') und zwei daran befestigte, nach oben ragende Seitenteile (11, 11') aufweist, mit mindestens einem Haken (20, 20'), der auf einer, zwischen den Seitenteilen (11, 11') eingesetzten Befestigungsachse (21, 21') von einer nach unten geklappten Ruheposition in eine nach oben ragende Verriegelungsposition verschwenkbar gelagert ist, und mit Befestigungseinrichtungen (22, 22'; 23, 23'), über welche das Bodenteil (14, 14') in einem Boden (1) des Frachtraums befestigbar ist,
**dadurch gekennzeichnet,**
daß das Bodenteil (14, 14') mindestens abschnittsweise (seitlicher Abschnitt 16, 16') derart elastisch nachgiebig ausgebildet ist, daß bei einer in vertikaler und/oder horizontaler auf den Haken (20, 20') wirkenden Kraft die Seitenteile (11, 11') unter Verformung des Bodenteils (14, 14') bewegbar sind.

2. Riegelelement nach Anspruch 1,
dadurch gekennzeichnet,
daß das Bodenteil (14, 14') einen verstärkten mittleren Abschnitt (15), an welchem die Befestigungseinrichtungen (22, 22'; 23, 23') angebracht sind, und zwei, sich vom mittleren Abschnitt (15) zu den Seitenteilen (11, 11') erstreckende seitliche Abschnitte (16, 16') aufweist, die zur Sicherstellung der elastischen Nachgiebigkeit dünner ausgebildet sind als der mittlere Abschnitt (15).

3. Riegelelement nach Anspruch 2,
dadurch gekennzeichnet,
daß die Befestigungseinrichtungen (22, 22'; 23, 23') und/oder der verstärkte mittlere Abschnitt (15) so ausgebildet sind, daß die seitlichen Abschnitte (16, 16') nach Befestigen des Riegelelementes am Boden (1) des Frachtraums im wesentlichen frei beweglich über diesem angeordnet sind.

4. Riegelelement nach einem der vorhergehenden Ansprüche,
dadurch gekennzeichnet,
daß zwei, durch eine Ausnehmung (17) voneinander getrennte Bodenteile (14, 14') vorgesehen sind.

5. Riegelelement nach einem der vorhergehenden Ansprüche,
dadurch gekennzeichnet,
daß die Seitenteile (11, 11') an ihren oberen und/oder unteren Kanten mit Verstärkungsrändern (12, 12') versehen sind, die dicker als ein Mittelteil (13) der Seitenteile (11, 11') und vorzugsweise nach außen über das Mittelteil (13) überstehend ausgebildet sind.

6. Riegelelement nach einem der vorhergehenden Ansprüche,
dadurch gekennzeichnet,
daß der Rahmen (10) einstückig ausgebildet ist.

7. Riegelelement nach einem der vorhergehenden Ansprüche,
dadurch gekennzeichnet,
daß der Rahmen (10) als Extrusionsteil oder Strangpreßprofil ausgebildet ist.
